# EUROPEAN PATENT APPLICATION

(11) **EP 2 566 029 A1**
(43) Date of publication of application: **06.03.2013**
(21) Application number: 10845524.7
(22) Date of filing: 09.06.2010
(51) Int. Cl.: H02M 5/42, H02M 7/42

(54) **ENERGY SUPPLY SYSTEM AND METHOD OF ELECTRONIC HIGH VOLTAGE POWER MUTUAL-INDUCTOR**

(30) Priority: 10.02.2010 CN 201010112774
(71) Applicant: Shenzhen Clou Electronics Co. Ltd, Shenzhen, Guangdong 518057 (CN)
(72) Inventor: TONG, Youqi, Guangdong 518057 (CN); RAO, Luhua, Guangdong 518057 (CN); FAN, Jiashuan, Guangdong 518057 (CN); LIU, Mingzhong, Guangdong 518057 (CN); GUO, Hong, Guangdong 518057 (CN)
(74) Representative: Schwerbrock, Florian
(86) International application number: PCT/CN2010/073718
(87) International publication number: WO 2011/097852

(57) **Abstract**

A power supply system with an electronic high-voltage transformer includes an input module for receiving a current and eliminating disturbance in the current, a transformer module for transforming the received current into a low-voltage direct current, a power supply module for transforming the low-voltage direct current into a high-frequency alternating current, and a magnetic processing module comprising one or more magnetic elements and one or more high-voltage resistant wires connecting with the magnetic elements so as to transform the high-frequency alternating current into a high-voltage alternating current. In accordance with the above power supply system and method with an electronic high-voltage transformer, the magnetic elements and the high-voltage resistant wires connected to the magnetic elements have a simple structure, easily extract electricity and effectively output power stage by stage so as to supply a high-power energy in a high-voltage state and thus achieve a purpose of isolation from a high voltage.

## Description

### BACKGROUND OF THE DISCLOSURE

### a) Field of the Disclosure

The invention relates to an electronic high-voltage transformer used in a power substation, and more particularly, to a power supply system and method with an electronic high-voltage transformer.

### b) Brief Description of the Related Art

In an electric-power industry, an electric-power system is developed in a trend to automation, intelligence and digitalization. It is irreversible to replace a traditional backward power substation with an intelligent one. Accordingly, electronic high-voltage transformers are believed to be increasingly demanded. It will become an important issue to provide a safe, reliable and low-cost transformer.

However, most of traditional electromagnetic transformers or electronic transformers employ optical fibers to supply power or are designed as autotransformers to supply power. The formers supply power in high costs and limited capacities, and thus cannot satisfy requirements of current high-power electronic transformers supplying power. The latters are hard to extract electricity due to unstable load outputs when being supplying power and have high failure rates.

### SUMMARY OF THE DISCLOSURE

In accordance with an objective of the present invention, a power supply system with an electronic high-voltage transformer is provided to supply high-power energy and easily extract electricity.

In accordance with an objective of the present invention, a power supply method with an electronic high-voltage transformer is provided to supply high-power energy and easily extract electricity.

A power supply system with an electronic high-voltage transformer includes an input module for receiving a current and eliminating disturbance in the current, a transformer module for transforming the received current into a low-voltage direct current, a power supply module for transforming the low-voltage direct current into a high-frequency alternating current, and a magnetic processing module comprising one or more magnetic elements and one or more high-voltage resistant wires connecting with the magnetic elements so as to transform the high-frequency alternating current into a high-voltage alternating current.

In accordance with the power supply system, the input module includes a common-mode inductor, a differential-mode inductor and a safety-recognized capacitor, wherein the common-mode inductor and the differential-mode inductor are connected through the safety-recognized capacitor.

In accordance with the power supply system, the low-voltage direct current has a voltage value between 100V and 600V.

In accordance with the power supply system, the power supply module includes a third inductor, a second capacitor and a third capacitor, wherein the second capacitor is connected to the third capacitor, and the third inductor is connected to a common node of the second and third capacitors.

In accordance with the power supply system, the magnetic processing module determines the number of the magnetic elements to be connected in series based on a required voltage, wherein the magnetic elements are connected stage by stage through the high-voltage resistant wires.

In accordance with the power supply system, the high-voltage resistant wires are capable of standing over 2000V of high-voltage alternating current.

A power supply method with an electronic high-voltage transformer includes receiving a current and rectifying and filtering the current to eliminate disturbance in the current, transforming the received current into a low-voltage direct current, using an inductor and a capacitor interacting to transform the low-voltage direct current into a high-frequency alternating current, and using one or more magnetic elements and one or more high-voltage resistant wires connecting with the magnetic elements to transform the high-frequency alternating current into a high-voltage alternating current to be output.

In accordance with the power supply method, the step of using the magnetic elements and the high-voltage resistant wires connecting with the magnetic elements to transform the high-frequency alternating current into the high-voltage alternating current to be output comprises connecting the magnetic elements stage by stage through the high-voltage resistant wires based on a required voltage so as to increase a value of voltage endurance such that the received high-frequency alternating current is led to be transformed into the required high-voltage alternating current.

In accordance with the power supply method, the low-voltage direct current has a voltage value between 100V and 600V.

In accordance with the above power supply system and method with an electronic high-voltage transformer, the magnetic elements and the high-voltage resistant wires connected to the magnetic elements have a simple structure, easily extract electricity and effectively output power stage by stage so as to supply a high-power energy in a high-voltage state and thus achieve a purpose of isolation from a high voltage.

In accordance with the above power supply system and method with an electronic high-voltage transformer, a high-frequency transformer used on a basis of a conventional AC / DC power supply is replaced with the magnetic elements with high permeability and low loss. Furthermore, cloth covered wires used in the high-frequency transformer are replaced with the high-voltage resistant wires. Thereby, this has features of easy winding, simple wiring, anti-jamming, high pressure endurance and wide voltage ranges.

In accordance with the above power supply system and method with an electronic high-voltage transformer, when high power energy is required to be supplied in a high voltage state, the electronic high-voltage transformer can supply power by means of a regular AC / DC power supply. Thereby, this has a simple structure and the assembly is required only on a basis of an original power supply without considerable modification of circuits. A cost of supplying power is effectively reduced.

In accordance with the above power supply system and method with an electronic high-voltage transformer, the input module can eliminate disturbance in the current and heat generated in the power supplying process can be effectively reduced. Thereby, stable power can be output and a fault rate of the transformer can be reduced.

### BRIEF DESCRIPTION OF THE DRAWINGS

The drawings disclose illustrative embodiments of the present disclosure. They do not set forth all embodiments. Other embodiments may be used in addition or instead. Details that may be apparent or unnecessary may be omitted to save space or for more effective illustration. Conversely, some embodiments may be practiced without all of the details that are disclosed. When the same numeral appears in different drawings, it refers to the same or like components or steps.

Aspects of the disclosure may be more fully understood from the following description when read together with the accompanying drawings, which are to be regarded as illustrative in nature, and not as limiting. The drawings are not necessarily to scale, emphasis instead being placed on the principles of the disclosure.
Figure 1 is a block diagram of a power supply system with an electronic high-voltage transformer in accordance with an embodiment.
Figure 2 is a principle diagram of a power supply system with an electronic high-voltage transformer in accordance with an embodiment.
Figure 3 is a flow chart of a power supply system with an electronic high-voltage transformer in accordance with an embodiment.

While certain embodiments are depicted in the drawings, one skilled in the art will appreciate that the embodiments depicted are illustrative and that variations of those shown, as well as other embodiments described herein, may be envisioned and practiced within the scope of the present disclosure.

### DETAILED DESCRIPTION OF THE INVENTION

Illustrative embodiments are now described. Other embodiments may be used in addition or instead. Details that may be apparent or unnecessary may be omitted to save space or for a more effective presentation. Conversely, some embodiments may be practiced without all of the details that are disclosed.

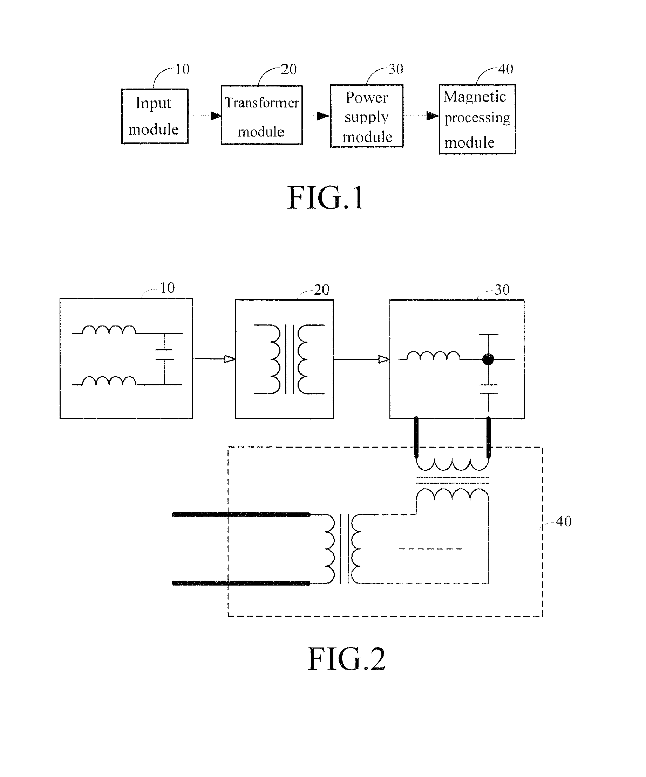

Figure 1 is a block diagram of a power supply system with an electronic high-voltage transformer in accordance with an embodiment. A power supply system with an electronic high-voltage transformer includes an input module 10, a transformer module 20, a power supply module 30 and a magnetic processing module 40.

The input module 10 is used to receive a current, such as alternating or direct current, and eliminate disturbance in the current. In an embodiment, the input module 10 is connected to a regular AC / DC power supply. Referring to Figure 2, the input module 10 includes a common-mode inductor L1, a differential-mode inductor L2 and a safety-recognized capacitor C1, wherein the common-mode inductor L1 and the differential-mode inductor L2 are connected through the safety-recognized capacitor C1 and receive the alternating or direct current from a power grid. The current is rectified and filtered such that disturbance of a high-order harmonic in the power grid can be eliminated.

The transformer module 20 is used to transform the received current into a low-voltage direct current, wherein the received alternating or direct current from the power grid has a high voltage, for example. The transformer module 20 is used to transform the rectified and filtered direct current or alternating current into a low-voltage direct current ranging from 100V to 600V. Thereby, stable power can be supplied in sequential power supply steps.

The power supply module 30 is used to transform the low-voltage direct current into a high-frequency alternating current. In an embodiment, the power supply module 30 is composed of pulse width modulation control circuits and includes a third inductor L3, a second capacitor C2 and a third capacitor C3 connected to the second capacitor C2, wherein the third inductor L3 is connected to a common node of the second and third capacitors C2 and C3. The power supply module 30 receives the low-voltage direct current to be transformed into the high-frequency alternating current with square waves to be output. The third inductor L3 effectively reduces heat created in the power supply steps and ensures the electronic high-voltage transformer outputs or supplies stable power.

The magnetic processing module 40 includes one or more magnetic elements and one or more high-voltage resistant wires connecting with the magnetic elements so as to transform the high-frequency alternating current into a high-voltage alternating current to be output. Based on a connecting high-voltage load, the received high-frequency alternating current can be transformed into the high-voltage alternating current required by the high-voltage load. The high-voltage resistant wires can stand over 2000V of high-voltage alternating current. The magnetic elements can be low LP materials. Referring to Figure 2, the high-frequency alternating current output from the power supply module 30 can act on the magnetic elements M2 and M3 with high permeability or low loss and power can be supplied to the high-voltage load through the high-voltage resistant wires. The number of the magnetic elements connected in series is determined by a required voltage of the high-voltage load such that the last stage of voltage is substantially equal to the required voltage of the high-voltage load. A first stage of magnetic element is connected to the power supply module 30 through one or more of the high-voltage resistant wires for receiving the high-frequency alternating current output from the power supply module 30. After a value of voltage endurance is increased, an alternating current with identical amplitudes is output to a second stage of magnetic element through one or more of the high-voltage resistant wires. The second stage of magnetic element operates, as the first stage of magnetic element, to increase a value of voltage endurance of the received alternating current and then output the resulting alternating current with identical amplitudes to a third stage of magnetic element through one or more of the high-voltage resistant wires. Multiple stages of magnetic elements are connected stage by stage through the high-voltage resistant wires. The last stage of magnet element is connected to the high-voltage load and supplies a high-voltage alternating current required by the high-voltage load. Thereby, the high-voltage load can acquire power from a regular AC / DC power supply through the magnetic processing module 40.

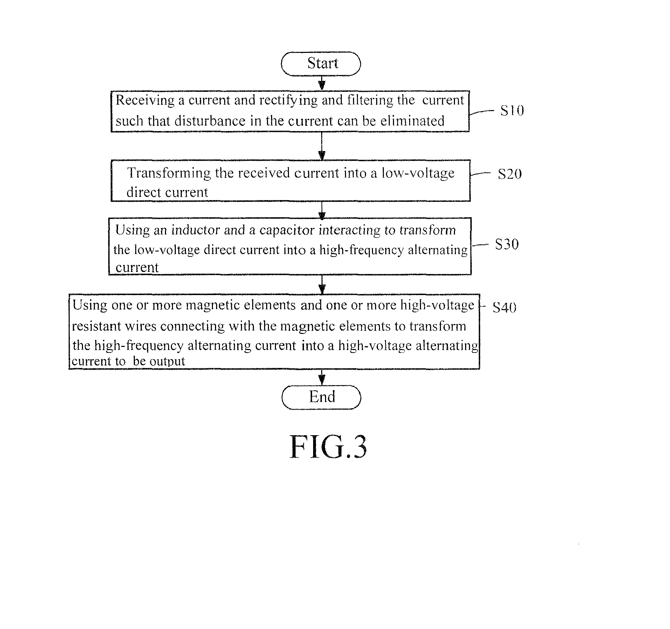

Figure 3 is a flow chart of a power supply system with an electronic high-voltage transformer in accordance with an embodiment, illustrated as bellow:
Step 10 includes receiving a current, such as alternating or direct current, and rectifying and filtering the current such that disturbance in the current can be eliminated. In an embodiment, in connecting with a regular AC / DC power supply, the alternating or direct current can be received from a power grid. The current is rectified and filtered such that disturbance of a high-order harmonic in the power grid can be eliminated.
Step 20 includes transforming the received current into a low-voltage direct current ranging from 100V to 600V.
Step 30 includes using an inductor and a capacitor interacting to transform the low-voltage direct current into a high-frequency alternating current. In an embodiment, under interaction of the inductor with the capacitor, the received low-voltage direct current can be transformed into the high-frequency alternating current with square waves to be output. An inductor can be set to effectively reduce heat created in the power supply steps and the electronic high-voltage transformer can be ensured to output or supply stable power.
Step 40 includes using one or more magnetic elements and one or more high-voltage resistant wires connecting with the magnetic elements to transform the high-frequency alternating current into a high-voltage alternating current to be output. In an embodiment, the magnetic elements are connected stage by stage through the high-voltage resistant wires based on a required voltage so as to increase a value of voltage endurance, and the received high-frequency alternating current is led to be transformed into the required high-voltage alternating current. The high-voltage resistant wires are capable of standing over 2000V of high-voltage alternating current. The magnetic elements can be low loss LP materials.

In accordance with the above power supply system and method with an electronic high-voltage transformer, the magnetic elements and the high-voltage resistant wires connected to the magnetic elements have a simple structure, easily extract electricity and effectively output power stage by stage so as to supply a high-power energy in a high-voltage state and thus achieve a purpose of isolation from a high voltage.

In accordance with the above power supply system and method with an electronic high-voltage transformer, a high-frequency transformer used on a basis of a conventional AC / DC power supply is replaced with the magnetic elements with high permeability and low loss. Furthermore, cloth covered wires used in the high-frequency transformer are replaced with the high-voltage resistant wires. Thereby, this has features of easy winding, simple wiring, anti-jamming, high pressure endurance and wide voltage ranges.

In accordance with the above power supply system and method with an electronic high-voltage transformer, when high power energy is required to be supplied in a high voltage state, the electronic high-voltage transformer can supply power by means of a regular AC / DC power supply. Thereby, this has a simple structure and the assembly is required only on a basis of an original power supply without considerable modification of circuits. A cost of supplying power is effectively reduced.

In accordance with the above power supply system and method with an electronic high-voltage transformer, the input module can eliminate disturbance in the current and heat generated in the power supplying process can be effectively reduced. Thereby, stable power can be output and a fault rate of the transformer can be reduced.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain. Furthermore, unless stated otherwise, the numerical ranges provided are intended to be inclusive of the stated lower and upper values. Moreover, unless stated otherwise, all material selections and numerical values are representative of preferred embodiments and other ranges and/or materials may be used.

The scope of protection is limited solely by the claims, and such scope is intended and should be interpreted to be as broad as is consistent with the ordinary meaning of the language that is used in the claims when interpreted in light of this specification and the prosecution history that follows, and to encompass all structural and functional equivalents thereof.

## Claims

1. A power supply system with an electronic high-voltage transformer comprises:
an input module receiving a current and eliminating disturbance in the current;
a transformer module transforming the received current into a low-voltage direct current;
a power supply module transforming the low-voltage direct current into a high-frequency alternating current; and
a magnetic processing module comprising one or more magnetic elements and one or more high-voltage resistant wires connecting with the magnetic elements so as to transform the high-frequency alternating current into a high-voltage alternating current.

2. The power supply system of claim 1, wherein the input module comprises a common-mode inductor, a differential-mode inductor and a safety-recognized capacitor, wherein the common-mode inductor and the differential-mode inductor are connected through the safety-recognized capacitor.

3. The power supply system of claim 1, the low-voltage direct current has a voltage value between 100V and 600V

4. The power supply system of claim 1, wherein the power supply module comprises a third inductor, a second capacitor and a third capacitor, wherein the second capacitor is connected to the third capacitor, and the third inductor is connected to a common node of the second and third capacitors.

5. The power supply system of claim 1, wherein the magnetic processing module determines the number of the magnetic elements to be connected in series based on a required voltage, wherein the magnetic elements are connected stage by stage through the high-voltage resistant wires.

6. The power supply system of claim 1or 5, wherein the high-voltage resistant wires are capable of standing over 2000V of high-voltage alternating current.

7. A power supply method with an electronic high-voltage transformer comprises:
receiving a current and rectifying and filtering the current to eliminate disturbance in the current;
transforming the received current into a low-voltage direct current;
using an inductor and a capacitor interacting to transform the low-voltage direct current into a high-frequency alternating current;
and
using one or more magnetic elements and one or more high-voltage resistant wires connecting with the magnetic elements to transform the high-frequency alternating current into a high-voltage alternating current to be output.

8. The method of Claim 8, wherein the step of using the magnetic elements and the high-voltage resistant wires connecting with the magnetic elements to transform the high-frequency alternating current into the high-voltage alternating current to be output comprises connecting the magnetic elements stage by stage through the high-voltage resistant wires based on a required voltage so as to increase a value of voltage endurance such that the received high-frequency alternating current is led to be transformed into the required high-voltage alternating current.

9. The method of Claim 8, wherein the low-voltage direct current has a voltage value between 100V and 600V
